# EUROPEAN PATENT APPLICATION

(11) **EP 2 511 838 A2**
(43) Date of publication of application: **17.10.2012**
(21) Application number: 12159691.0
(22) Date of filing: 15.03.2012
(51) Int. Cl.: G06F 17/30

(54) **Synchronization method and apparatus of portable terminal**

(30) Priority: 14.04.2011 KR 20110034640
(71) Applicant: Samsung Electronics Co., Ltd., Suwon-si, Gyeonggi-do, 443-742 (KR)
(72) Inventor: Cho, Hyo Jae, Gyeonggi-do (KR); Yim, Soe Youn, Gyeonggi-do (KR); Lim, Young Seok, Gyeonggi-do (KR)
(74) Representative: Jenkins, Richard Gavin

(57) **Abstract**

A synchronization method and apparatus for synchronizing data at synchronization intervals configured individually for respective data objects in a portable terminal is provided. The synchronization method includes configuring respective synchronization intervals of a plurality of data objects, and synchronizing the data objects the respective synchronization intervals. The data synchronization method and apparatus allows for setting of respective synchronization intervals to a first value for the data that are changed frequently and a second value for the data that are not changed frequently. Also, the data synchronization method and apparatus is capable of configuring the synchronization intervals of the data objects according to properties of the data objects so as to reduce unnecessary data synchronization attempts.

## Description

### BACKGROUND OF THE INVENTION

### 1. Field of the Invention:

The present invention relates to a synchronization method and apparatus of a portable terminal. More particularly, the present invention relates to a synchronization method and apparatus of a portable terminal for synchronizing data at synchronization intervals configured individually for respective data objects.

### 2. Description of the Related Art:

With the advance of data communications and semiconductor technologies, the use of portable terminals is widespread and a number of users of portable terminals is increasing rapidly. Recently, portable terminals are designed to be multifunctional devices integrating various functions in line with the mobile convergence tendency of data communications. As a representative case, recent mobile communication terminals integrate various multimedia functions including a Television (TV) function such as Digital Multimedia Broadcasting (DMB) and Digital Video Broadcasting (DVB), a music player function (e.g., Moving Picture Experts Group (MPEG)-1 or MPEG-2 Audio Layer-3 (MP3)), a camera function, an Internet access function, an electronic dictionary function, and a variety of other similar functions provided using mobile communication devices, as well as conventional communication functions such as voice and message communication.

Meanwhile, recent portable terminals include a high capacity storage device for storing large amounts of data. With the increase of an amount of data stored in the portable terminal, data synchronization is becoming an important feature for preventing the loss of important data due to the loss of, damage to, or malfunction of the portable terminal. Also, the recent portable terminals support highly advanced Social Networking Services (SNS), such as Twitter and Facebook, due to the advance of mobile Internet technologies. Such SNS-enabled portable devices contribute to the increased of the social networks. Typically, SNS supports data synchronization of the portable device with an SNS server. As the use of the SNS increases, the data synchronization service is becoming increasingly important.

However, the related-art data synchronization methods are designed to synchronize all data stored on the portable terminals using a synchronization cycle without consideration of the properties of various data stored on the portable terminals. Accordingly, contact data, which are not changed frequently, and text message data (for example, Short Message Service (SMS) data and Multimedia Messaging Service (MMS) data), which are changed frequently, are synchronized at a same synchronization interval, resulting in a management inefficiency problem. In more detail, the related-art data synchronization method has a drawback in that a short synchronization interval may cause unnecessarily frequent synchronizations of the data that are not changed frequently, such as the contact data, and may result in a waste of battery power and consume bandwidth unnecessarily, while a long synchronization interval may cause a delay in the updating of the data that are frequently changed, resulting in ineffective real time updates of recent states of the data stored on the portable terminals.

### SUMMARY OF THE INVENTION

Aspects of the present invention are to address at least the above-mentioned problem and/or disadvantages and to provide at least the advantages described below. Accordingly, an aspect of the present invention is to provide an object of the present invention to provide a method and apparatus for synchronizing data at synchronization intervals configured for respective data objects.

In accordance with an aspect of the present invention, a synchronization method of a portable terminal is provided. The method includes configuring respective synchronization intervals of a plurality of data objects, respectively, and synchronizing the data objects at the respective synchronization intervals.

In accordance with another aspect of the present invention, a synchronization apparatus of a portable terminal is provided. The apparatus includes a display unit for displaying a synchronization interval configuration screen for configuring synchronization intervals of a plurality of data objects in response to a synchronization interval configuration request, and a control unit for synchronizing the data objects at respective synchronization levels when the synchronization intervals of the plurality of data objects are configured on the synchronization interval configuration screen.

In accordance with another aspect of the present invention, a synchronization method of a portable terminal having a plurality of data objects is provided. The method includes synchronizing a first group of the plurality of data objects at a first synchronization interval, and synchronizing a second group of the plurality of data objects at a second synchronization interval configuring.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic diagram illustrating a synchronization system according to an exemplary embodiment of the present invention;

FIG. 2 is a block diagram illustrating a configuration of a portable terminal according to an exemplary embodiment of the present invention;

FIG. 3 is a flowchart illustrating a data synchronization method of a portable terminal according to an exemplary embodiment of the present invention;

FIG. 4 is a flowchart illustrating a synchronization interval configuration procedure of a data synchronization method of a portable terminal according to an exemplary embodiment of the present invention; and

FIG. 5 is a diagram illustrating screen images of a synchronization interval configuration screen of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

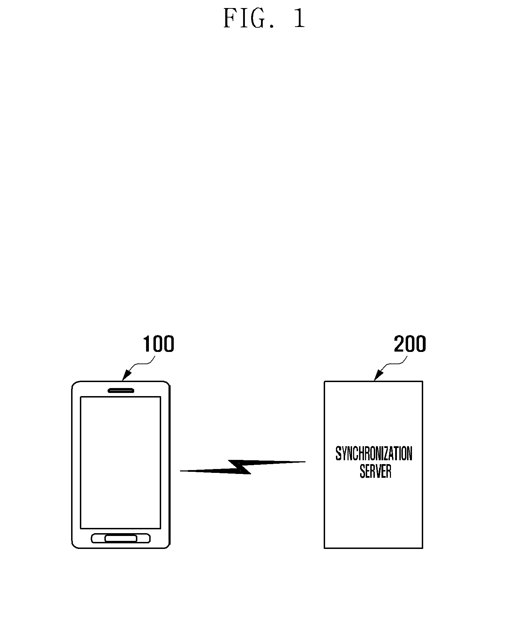

FIG. 1 is a schematic diagram illustrating a synchronization system according to an exemplary embodiment of the present invention.

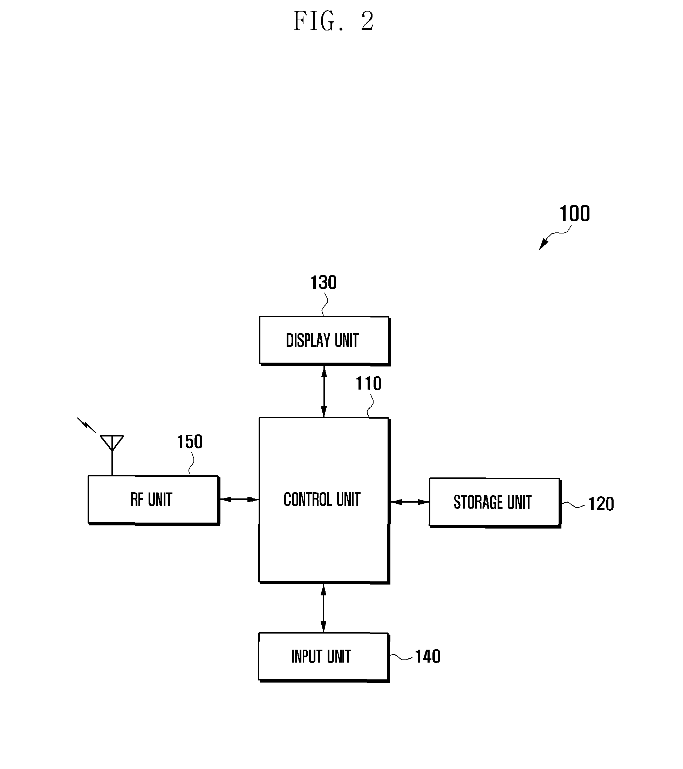

Referring to FIG. 1, in the synchronization system, a portable terminal 100 may perform synchronization with a synchronization server 200 at a predetermined interval. Particularly, the portable terminal 100 is capable of synchronizing data stored on the portable terminal 100 with the synchronization server 200 at synchronization intervals configured with respect to respective data objects stored on the portable terminal 100. To perform the synchronization, the portable terminal 100 may display a list of data objects (e.g., a phonebook, messages, a calendar, and other similar data objects), configured with respective synchronization intervals, on a display unit 130 (see FIG. 2) in response to a synchronization interval configuration request. A user may select a data object from the list in order to configure a synchronization interval of the selected data object. According to the present exemplary embodiment of the present invention, the user may select at least one data object to configure the synchronization interval of the selected data object.

The synchronization server 200 provides data synchronization service. The synchronization server 200 may be provided by a Social Networking Service (SNS) provider, such as Facebook, Twitter, and Google, and a mobile communication carrier that provides a mobile communication network. The synchronization service includes a first type of service for updating the data of the portable terminal 100 by referencing the data stored in the synchronization server 100, a second type of service for updating the data stored in the synchronization server 100 by referencing the data stored in the portable terminal 100, and a third type of service for integrating the data stored in the portable terminal 100 with the data stored in the synchronization server 200, after comparing the respective data stored in the portable terminal 100 and the synchronization server 200.

FIG. 2 is a block diagram illustrating a configuration of a portable terminal according to an exemplary embodiment of the present invention.

Referring to FIG. 2, the portable terminal 100 according to the present exemplary embodiment of the present invention includes a control unit 110, a storage unit 120, the display unit 130, an input unit 140, and a Radio Frequency (RF) unit 150.

The input unit 140 generates input signals according to user inputs to alphanumeric keys and functions keys of the input unit 140, wherein the input signals are related to configurations and controls of functions of the portable terminal 100 and are provided to the control unit 110. As noted, the input unit 140 includes a plurality of the alphanumeric keys and the function keys for inputting commands and configuring and executing functions and operations provided by the portable terminal 100. The function keys may include navigation keys, side keys, shortcut keys, and other similar keys and buttons. For example, the input unit 140 may include a call key for placing a call, a call end key, and a hold key. Particularly in the present exemplary embodiment of the present invention, the input unit 140 can generate an input signal for configuring a synchronization interval of a data object to the control unit 110. The input unit 140 can be implemented with at least one of a touchpad, a touchscreen, a normal keypad, a QWERTY keypad, or other similar input devices.

The RF unit 150 establishes radio channels for voice and data communication channels (including video call channels and other similar RF communication channels) with a base station. The data communication channels may be established through a communication network such as an Evolution-Data Only (EVDO) network, a High Speed Downlink Packet Access (HSDPA) network, a High Speed Uplink Packet Access (HSUPA) network, a Long Term Evolution (LTE) network, or other similar communication network types. The RF unit 150 includes an RF transmitter (not shown) for up-converting and amplifying signals to be transmitted, an RF receiver (not shown) for low noise amplifying and down-converting a received signal, and a duplexer (not shown) for isolating receive and transmit signal paths in the mobile terminal 100. Particularly in the present exemplary embodiment of the present invention, the RF unit 150 may transmit a synchronization request signal to the synchronization server 200 under the control of the control unit 110.

In detail, the RF unit 150 may transmit the synchronization request signal for synchronizing a data object to the synchronization server 200 at an interval configured according to a property of the data object. For example, the RF unit 150 may transmit to the synchronization server 200 the synchronization request signal of a first data object (e.g., a phonebook) at first synchronization interval, may transmit the synchronization request signal of a second data object (e.g., a text message) at second synchronization interval, and may transmit the synchronization request signal of a third data object (e.g., a calendar) at third synchronization interval. Afterward, if the data objects, as stored in the portable terminal 100 and the synchronization server 200, are not identical with each other, then the RF unit 150 may transmit the data added to the data object of the portable terminal 100 to the corresponding data object of the synchronization server 200 or may receive the data added to the data object of the synchronization server 200 so as to add such data to the data object of the portable terminal 100.

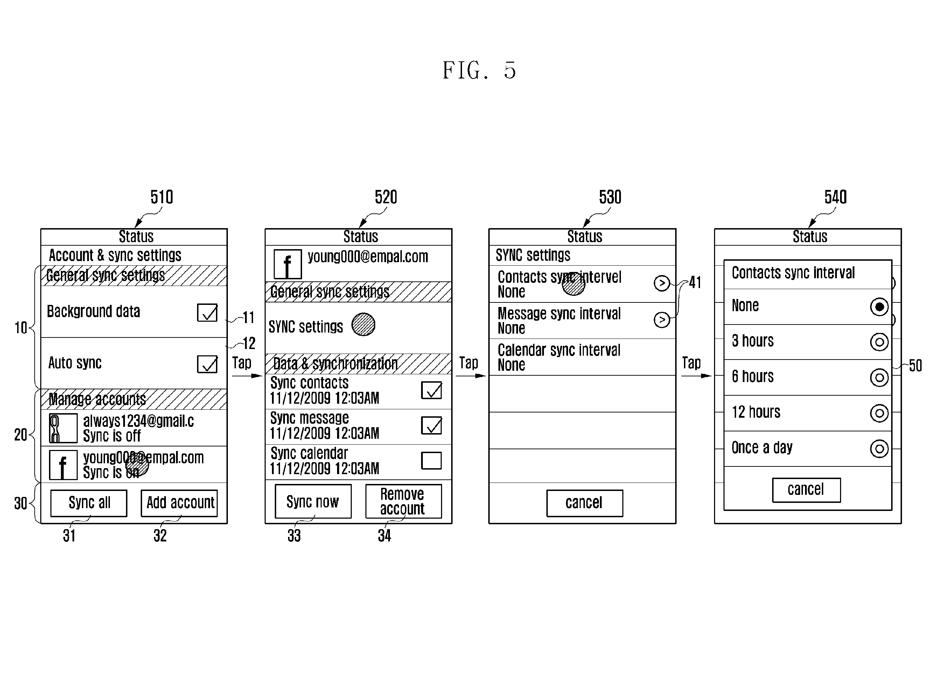

The display unit 130 displays information input by and to be provided to the user as well as various menus, icons, and information corresponding to applications and operations of the portable terminal 100. For example, the display unit 130 displays various screens, such as a standby mode screen, a message composition screen, a call progress screen, and other similar screens, according to the operation of the portable terminal 100. The display unit 130 may also provide a synchronization interval configuration screen allowing the user to configure the synchronization intervals respective to the data objects. The synchronization interval configuration screen is described below with reference to FIG. 5. The display unit 130 may be implemented with one of a Liquid Crystal Display (LCD), an Organic Light Emitted Diode (OLED) display, an Active Matrix OLED (AMOLED) display, or any other suitable display type. In a case where a touchscreen is provided, the display unit 130 may provide the functions of the input unit 140.

The storage unit 120 stores the programs related to the data synchronization function as well as user data according to the present exemplary embodiment of the present invention. The storage unit 120 may be divided into regions for program data and user data. The program data region stores programs and data corresponding to the programs for controlling overall operations of the portable terminal, an Operating System (OS) for booting the portable terminal 100, and application programs related to multimedia contents playback and optional functions such as a camera function, an audio playback function, a still and motion picture playback function, a short range radio communication function, and other similar functions. Particularly, in the present exemplary embodiment of the present invention, the program data region stores a synchronization program for synchronizing data according to the respective data object synchronization intervals. For example, the synchronization program synchronizes the first, the second, and the third data objects at the respective first, second, and third synchronization intervals.

The user data region stores the data generated by the portable terminal 100, such as a phonebook, audio and video contents, and metadata of the user data. Particularly, in the present exemplary embodiment of the present invention, the user data region can store the data objects and the synchronization intervals of the individual data objects. Here, the synchronization intervals may be configured respective to each data object. For example, the first data object, e.g., a phonebook, may be configured with the first synchronization interval, the second data object, e.g., a text message, may be configured with the second synchronization interval, and the third data object, e.g., a calendar, may be configured with the third synchronization interval.

The control unit 110 controls overall operations and signaling among internal function blocks of the portable terminal 100. Particularly, the control unit 110 controls the data object synchronization according to the respective data object synchronization intervals. In more detail, the control unit 110 determines whether the synchronization mode is activated (i.e., is in an "ON" state) and, if so, checks the respective data object synchronization intervals stored in the storage unit 120 and executes data synchronization according to the respective data object synchronization intervals.

Meanwhile, the portable terminal 100 may be configured so as to provide a related-art data synchronization method (hereinafter, referred to as a uniform synchronization mode), as described above, for synchronizing all the types of data objects at a single synchronization interval, along with the data synchronization method of the present exemplary embodiment (hereinafter, referred to as a data-specific synchronization mode) for synchronizing each of the data objects at the respective synchronization intervals. In this case, the control unit 110 determines whether the current synchronization mode is the uniform synchronization mode or the data-specific synchronization mode. If the portable terminal 100 is operating according to the data-specific synchronization mode, the control unit 110 synchronizes the data objects at respective synchronization intervals. Otherwise, if the portable terminal 100 is operating according to the uniform synchronization mode, the portable terminal 100 synchronizes the data objects simultaneously at the uniform synchronization interval. In such a case, the data synchronization is performed repeatedly until the synchronization mode is deactivated (i.e., is in an "OFF" state).

If the synchronization interval configuration is requested, then the control unit 110 controls the display unit 130 so as to display the synchronization interval configuration screen. The user can configure the synchronization intervals of the individual data objects. The synchronization interval configuration screen is described below later with reference to FIG. 5.

Although the above description has been directed to the case where the data objects are synchronized over a radio channel established by the RF unit 150, the present invention is not limited thereto. For example, the data synchronization may be performed through any other suitable radio communication network or wireless communication scheme, such as Bluetooth and Near Field Communication (NFC) schemes, and Wi-Fi and a Wireless Broadband (WiBro) communication networks. For this purpose, the portable terminal 100 may further include a Bluetooth module, a NFC module, a Wi-Fi module and/or WiBro module. The portable terminal 100, according to the present exemplary embodiment of the present invention, may further include other supplementary function elements such as a camera module for capturing still and motion pictures, a broadcast module for receiving broadcast signal, a digital audio playback module for playing audio files, and an approximation sensor for sensing an approaching object. Although not enumerated herein, the portable terminal 100 may further include any of the aforementioned components and their equivalent components.

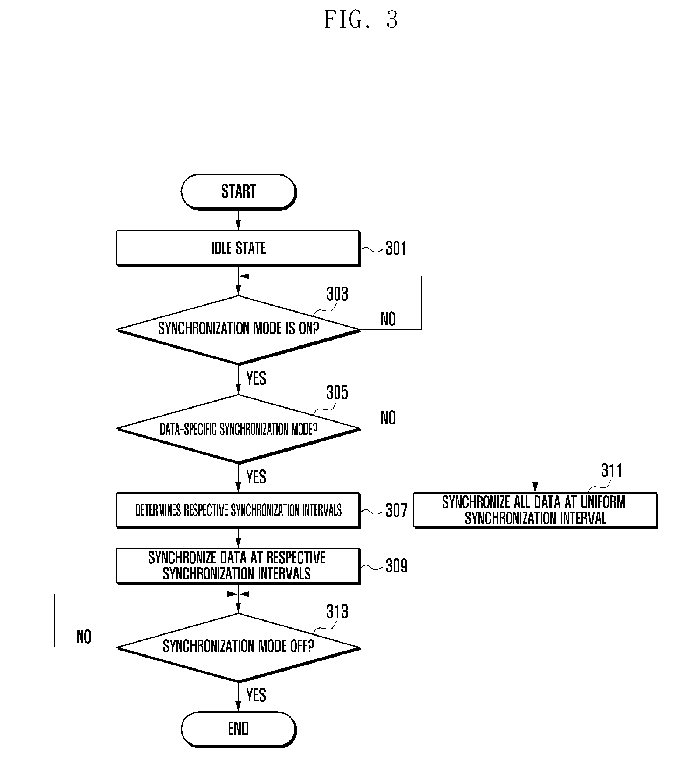

FIG. 3 is a flowchart illustrating a data synchronization method of a portable terminal according to an exemplary embodiment of the present invention.

Referring to FIG. 3, the control unit 110 detects that the portable terminal is operating in an idle state in step 301. The control unit 110 then determines whether the synchronization mode is activated in step 303. If the synchronization mode is activated, then, in step 305, the control unit 110 determines whether the current synchronization mode is the data-specific synchronization mode. If the current synchronization mode is not the data-specific synchronization mode, then, in step 311, the control unit 110 synchronizes all of the data objects simultaneously at a uniform synchronization interval.

If the current synchronization mode is the data-specific synchronization mode, then the control unit 110 determines the respective synchronization intervals of the individual data objects stored in the storage unit 120 in step 307. Next, the control unit 110 synchronizes the data objects at respective synchronization intervals in step 309. For example, the control unit 110 synchronizes the first data object at the first synchronization interval (e.g., 10 days), the second data object at the second synchronization interval (e.g., 1 hour), and the third data object at the third synchronization interval (e.g., 1 day).

The control unit 110 determines whether the synchronization mode has been turned OFF or deactivated in step 313. The monitoring of step 313 continues until a synchronization mode deactivation event is detected. If the synchronization mode deactivation event is detected, then the control unit 110 deactivates or turns OFF the synchronization mode.

The description of the present exemplary embodiment has been made under the assumption that the proposed data-specific synchronization mode and the related-art uniform synchronization mode are both supported. In a case where the related-art uniform synchronization mode is not supported, steps 305 and 311 of the present exemplary embodiment may be omitted. That is, when the related-art uniform synchronization mode is not supported, then the control unit 110 determines the data-specific synchronization intervals and starts data synchronization at the data-specific synchronization intervals immediately after determining that the data-specific synchronization mode is activated.

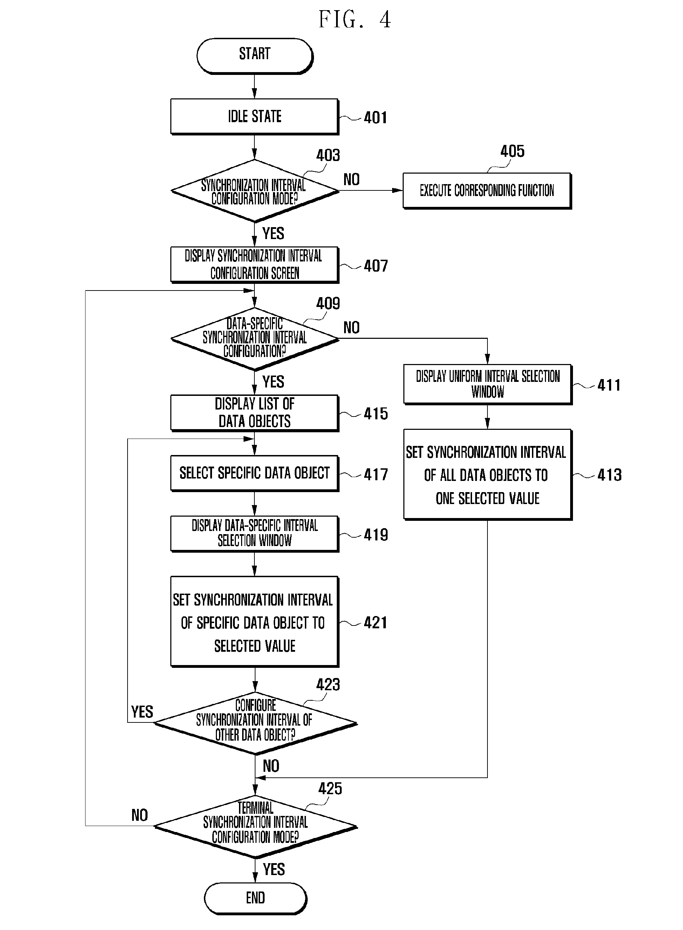

FIG. 4 is a flowchart illustrating a synchronization interval configuration procedure of a data synchronization method of a portable terminal according to an exemplary embodiment of the present invention.

Referring to FIG. 4, the control unit 110 determines that a portable terminal 100 is in idle state in step 401. Next, in step 403, the control unit 110 determines if a signal is input and, if the signal is detected, determines whether the signal is a synchronization interval configuration mode request. In other words, the control unit 110 determines if the synchronization interval configuration mode is activated at step 403. If the input signal is not the synchronization interval configuration mode request, then, in step 405, the control unit 110 executes a function corresponding to the input signal. For example, the control unit 110 may execute an audio playback function, a video playback function, or a text message composition function, or may maintain an idle state in response to the input signal. Otherwise, if the input signal is the synchronization interval configuration mode request, then, in step 407, the control unit 110 controls the display unit 130 to display a synchronization interval configuration mode screen.

Next, the control unit 110 determines whether a data-specific synchronization interval configuration request is detected in step 409. If no data-specific synchronization interval configuration request is detected, then, in step 411, the control unit 110 displays a uniform synchronization interval selection window on the display unit 130. Next, the control unit 110 sets the uniform synchronization interval to be a value selected in the displayed uniform synchronization interval selection window, which sets the synchronization interval of all data objects to the selected value, in step 412. Then, the procedure goes on to step 425. The uniform synchronization interval selection window may be configured with a plurality of synchronization interval values in order for the user to select a desired synchronization interval. The uniform synchronization interval selection window may include an input menu allowing the user to input a custom synchronization interval value.

If a data-specific synchronization interval configuration request is detected at step 409, then the control unit 110 displays a list of the data objects on the display unit 130 in step 415. The control unit 110 detects a selection of a certain data object from the list in step 417. If a certain data object is selected from the list, then in step 419, the control unit 110 controls the display unit 130 to display a data-specific synchronization interval selection window for configuring the synchronization interval of the selected data object. Next, in step 421, the control unit 110 sets the synchronization interval of the data object to be a value selected in the data-specific synchronization interval selection window.

Afterward, the control unit 110 determines whether a data-specific synchronization interval configuration request for another data object is detected in step 423. If a data-specific synchronization interval configuration request is detected, then the control unit 110 returns the procedure at step 417 so as to perform steps 417 to 421. If no data-specific synchronization request for another data object is detected at step 423, then the control unit 110 determines whether a synchronization interval configuration mode termination request is detected in step 425. If there is no synchronization interval configuration mode termination request, the control unit 110 returns the procedure at step 409 so as to repeat the procedure from step 409. Otherwise if a synchronization interval configuration mode termination request is detected, then the control unit 110 ends the synchronization interval configuration mode and returns to an idle state so as to control the synchronization of the data objects at the synchronization interval as described with reference to FIG. 3.

FIG. 5 is a diagram illustrating screen images of a synchronization interval configuration screen of a portable terminal according to an exemplary embodiment of the present invention.

Referring to FIG. 5, if the synchronization interval configuration request is input to the portable terminal 100, then the display unit 130 displays a synchronization interval configuration screen 510 according to the control of the control unit 110. The synchronization interval configuration screen 510 includes a general synchronization settings region 10, an application list region 20 listing the applications of which data synchronizations are configured, and an option menu region 30. The applications may be the SNS service applications such as Facebook and Twitter. However, the present invention is not limited thereto. For example, the application can be the application provided by the mobile communication carrier or the portable phone manufacturer for synchronizing data such as a phonebook, text messages, and email data, or other similar applications that are executable on a portable terminal. The general synchronization settings region 10 presents a Background data menu item 11 for transmitting/receiving data in a background and an Auto-sync menu item 12 for enabling/disabling auto-synchronization. The option menu region 30 includes a Sync all menu item 31 for synchronizing all of the data and an Add account menu item 32 for adding an application to which the synchronization configuration is applied.

If a specific application is selected (for example, a touch is input to a touchscreen) on the synchronization interval configuration screen, as shown in the synchronization interval configuration screen 510, then the display unit 130 displays an application specific setting screen 520, which allows for selecting a data object and configuring the synchronization interval of the selected data object. In the application specific setting screen 520, the selection boxes corresponding to the data objects of "contacts," "message," and "calendar" are provided. As shown in the application specific setting screen 520, the "contacts" and "message" data objects are selected so as to be synchronized. In this state, the user can select a Sync now button 33 for synchronizing the selected data objects or Remove account button 34 for removing the synchronization settings of the current application.

If a synchronization interval configuration request is detected in a state where the application specific setting screen 520 is displayed, then the display unit 130 displays the data-specific synchronization interval configuration screen 530. The data-specific synchronization interval configuration screen 530 includes menu items for selecting one of the data objects (e.g., a contacts data object, a message data object, and a calendar data object) so as to set their respective synchronization intervals. Among the data objects, the calendar data object has not been set as the data object to be synchronized in the previous steps shown in the application specific setting screen 520, such that an indication mark 41 indicating data synchronization availability is not provided for the calendar data object.

If the user selects the contacts data object having the indication mark 41, as shown in the data-specific synchronization interval configuration screen 530, the display unit 130 then displays a synchronization interval selection window 50 for the user to select a synchronization interval value, as shown in screen 540. In the present exemplary embodiment, a contact synchronization interval selection window is shown as the synchronization interval selection window 50, and shows a list of selectable synchronization interval values for contacts synchronization. However, the present invention is not limited thereto. For example, the synchronization interval selection window 50 for the contacts may include an input box for the user to enter a certain value to be set as the synchronization interval. Once the synchronization interval of the contacts data object has been configured, the display unit 130 displays the data-specific synchronization interval configuration screen 530 according to the control of the control unit 110. Accordingly, the user may select another data object (e.g., the message) so as to configure the synchronization interval of the selected data object. Once the synchronization intervals of the intended data objects are all configured, the control unit 110 ends the synchronization interval configuration mode.

As described above, the data synchronization method and apparatus according to the present exemplary embodiments is capable of setting a synchronization interval to a first value for the data that are changed frequently and a second value for the data that are not changed frequently. For example, the first value may be less than the second value so that the data that are changed frequently are synchronized more often than the data that are not changed frequently. Also, the data synchronization method and apparatus according to the present exemplary embodiments is capable of configuring synchronization intervals of data objects according to properties of the data objects so as to reduce unnecessary data synchronization attempts, thus, resulting in reductions of data or bandwidth consumption, Central Processing Unit (CPU) overload, and battery consumption.

The data synchronization method of a portable terminal according to an exemplary embodiment of the present invention may be recorded in a non-transient computer-readable storage media in the form of program commands so as to be executed by various computer means. Here, the non-transient computer-readable storage media may store the program commands, data files, and data structures independently or in a combined form. The program commands recorded in the non-transient computer-readable storage media can be designed and configured for dedicated use in the present invention or the ones well-known to those in the computer software field.

The non-transient computer-readable media may be magnetic media such as a hard disk, a floppy disk and magnetic tape, optical media such as a Compact Disk Read-Only Memory (CD-ROM) and a Digital Versatile Disk (DVD), magnetooptical media, such as floptical disk, and hardware devices such as a ROM, a Random-Access Memory (RAM), a flash memory, or other suitable storage mediums or devices, particularly implemented to store and execute program commands. The program commands may be machine language codes produced by a compiler and high-level language codes that may be executed by computers using an interpreter, or other similar computer programs. In order to perform the operations of the present exemplary embodiments, the hardware devices may be implemented to operate as at least one software module or as a combination of several software modules.

While the invention has been shown and described with reference to certain exemplary embodiments thereof, it will be understood by those skilled in the art that various changes in form and details may be made therein without departing from the spirit or the scope of the invention as defined by the appended claims and their equivalents.

## Claims

1. A synchronization method of a portable terminal, the method comprising:
configuring respective synchronization intervals of a plurality of data objects, respectively; and
synchronizing the data objects at the respective synchronization intervals (309).

2. The method of claim 1, wherein the configuring of the respective synchronization intervals comprises:
determining whether a detected input signal is a data-specific synchronization interval request (409);
selecting, when the detected input signal is the data-specific synchronization interval request, at least one of the data objects in response to a user input (417);
receiving a synchronization interval configuration request for a data object of the at least one data object;
displaying an interval selection window having a plurality of synchronization interval values for the data object of the at least one data object (419); and
selecting a synchronization interval value from among the displayed plurality of synchronization values; and
setting the selected synchronization interval value as a synchronization interval of the requested data object (421).

3. The method of claim 2, wherein the interval selection window comprises an input box for inputting a value entered by a user.

4. The method of claim 2, further comprising:
displaying, when the input signal is not the data-specific synchronization interval configuration request, a uniform interval selection window (411); and
setting the synchronization interval of all data objects to a synchronization interval value selected from the uniform interval selection window (413).

5. The method of claim 1, further comprising:
determining if a synchronization mode is activated (303);
determining whether a current synchronization mode is a data specific synchronization mode (305); and
executing synchronization of the data objects at respective synchronization intervals when the current synchronization mode is the data-specific synchronization mode (309); and
executing synchronization of the data objects at a uniform synchronization interval when the current synchronization mode is not the data-specific synchronization mode (311).

6. The method of claim 1, wherein the data objects comprise at least one of contacts, messages, and a calendar.

7. A synchronization apparatus of a portable terminal 100, the apparatus comprising:
a display unit 130 for displaying a synchronization interval configuration screen for configuring synchronization intervals of a plurality of data objects in response to a synchronization interval configuration request; and
a control unit 110 for synchronizing the data objects at respective synchronization intervals when the synchronization intervals of the plurality of data objects are configured on the synchronization interval configuration screen.

8. The apparatus of claim 7, further comprising a storage unit 120 for storing the synchronization intervals of the respective data objects.

9. The apparatus of claim 7, further comprising a radio frequency unit 150 for establishing a radio channel for exchanging the data objects with a synchronization server 200 at the synchronization intervals according to control of the control unit 110.

10. The apparatus of claim 7, wherein the control unit 110 determines whether a synchronization mode is activated,
wherein the controller determines, when a synchronization mode is activated, whether the activated synchronization mode is a data-specific synchronization mode, and
wherein the control unit, when the activated synchronization mode is not the data-specific synchronization mode, synchronizes the data objects at a preconfigured synchronization interval.

11. The apparatus of claim 7, wherein the control unit 110 determines, when a synchronization interval configuration is requested, whether the requested synchronization interval configuration is a data-specific synchronization interval configuration,
wherein the control unit controls to display, when the requested synchronization interval configuration is the data-specific synchronization interval configuration, a selection screen enabling selection of at least one of the data objects,
wherein the control unit controls, when one of the data objects is selected, the display unit 130 to display an interval selection window 50 having a plurality of synchronization interval values, and
wherein the control unit sets the synchronization interval of the selected data object to a synchronization interval value selected in the interval selection window.

12. The apparatus of claim 11, wherein the interval selection window 50 comprises an input box for inputting a synchronization interval value entered by a user.

13. The apparatus of claim 11, wherein the control unit 110 controls, when the synchronization interval configuration is not the data-specific synchronization interval configuration, the display unit 130 to display a uniform interval selection window, and
wherein the control unit sets the synchronization interval of the data objects to a synchronization interval value selected on the uniform interval selection window.

14. The apparatus of claim 7, wherein the data objects comprise at least one of contacts, messages, and calendar.
